# EUROPÄISCHE PATENTSCHRIFT

(11) **EP 0 944 332 B1**
(45) Veröffentlichungstag und Bekanntmachung des Hinweises auf die Patenterteilung: **12.11.2003**
(21) Anmeldenummer: 97952863.5
(22) Anmeldetag: 03.12.1997
(51) Int. Cl.: A23K 1/00

(54) **Neuartiges Flockenfutter für Wassertiere und Verfahren zu dessen Herstellung**
Novel flake-shaped food for aquatic animals and the process for its manufacture
Aliment en flocons d'un type nouveau pour animaux aquatiques et un procedure pour son manufacture.

(30) Priorität: 11.12.1996 DE 19651561
(43) Veröffentlichungstag der Anmeldung: 29.09.1999
(73) Patentinhaber: Tetra Werke Dr.rer.nat. Ulrich Baensch GmbH, 49324 Melle (DE)
(72) Erfinder: KÜRZINGER, Hubert, D-49324 Melle (DE); SCHMIDT, Hartmut, D-49124 Georgsmarienhütte (DE); KUHLMANN, Dietmar, D-31655 Stadthagen (DE); HEINE, Rüdiger, D-49525 Lengerich (DE)
(74) Vertreter: Miller, Andreas, Dr.
(86) Internationale Anmeldenummer: EP9706753
(87) Internationale Veröffentlichungsnummer: WO98025478

(56) Entgegenhaltungen:
- EP-A- 0 337 573
- DE-A- 3 148 658
- DE-A- 3 707 032
- GB-A- 768 189
- GB-A- 2 257 012
- GB-A- 2 269 084
- US-A- 3 528 815
- US-A- 4 696 634
- DATABASE WPI Section Ch, Week 9332 Derwent Publications Ltd., London, GB; Class D13, AN 93-251728 XP002062024 & HU 62 771 A (SUSAN L) , 28.Juni 1993

## Beschreibung

Die Erfindung betrifft neuartige Flockenfutter für Wassertiere, insbesondere Fische, Shrimps und Invertebraten im Süß- und Seewasser sowie ein Verfahren zur Herstellung desselben.

Bekannt ist die Herstellung von Getreideflocken (z.B. Haferflocken) für die Humanernährung mit Hilfe der Flockierung. Getreideflocken sind Produkte der Schälmüllerei, die vorwiegend aus Hafer, Weizen, Roggen, Gerste, Hirse und Reis hergestellt werden. Zur Produktion von Haferflocken werden ganze Kerne als auch Grütze in eine verformbare, elastische Struktur durch hydrothermische Behandlung überführt. Das gedämpfte Gut wird gleichmäßig auf einen Flockenwalzenstuhl aufgebracht, dessen Anpreßdruck hydraulisch regelbar ist. Man unterscheidet Großblattflocken (Flocken aus dem ganzen Kern) mit etwa 0,5 mm Auswalzdicke und Kleinblattflocken (Flocken aus Grütze) mit 0,3 mm Auswalzdicke.

Bekannt sind weiterhin Flockenfutter für die Ernährung von Warm- und Kaltwasser-zierfischen im Süß- und Seewasser. Flockenfutter für Fische sind gegenwärtig dadurch gekennzeichnet, daß sie mit Walzentrocknern hergestellt werden. Die Walzentrocknung ist ein Prozeß des Trocknens von durch Wasserzugabe flüssigen bis pastösen Rohstoffmischungen. Sie stellt heute den Stand der Technik dar und ist allgemein verfügbar. Zierfisch-Flockenfutter unterschiedlicher Hersteller unterscheiden sich daher äußerlich kaum noch.

Dokument US-4 696 634 beschreibt einen Extruder zur Herstellung von Wassertier-Flockenfutter.

Dokument EP-0 337 573 betrifft futter und dessen Herstellungsverfahren, insbesondere für Hunde oder Katzen.

Dokument GB-2 257 012 betrifft futter für Rinder, Schafe, Schweine, Pferde und Geflügel.

Dokument US-3 528 815 betrifft futter, das allgemein über Vieh-Fütterungsanlagen Verabreicht wird.

Bei der Herstellung von Flockenfutter für Zierfische wird eine von innen beheizte Walze mittels einer Auftragvorrichtung gleichmäßig über die gesamte Walzenlänge mit einer vorher angeteigten, viskosen Rohstoffmischung (Feuchtigkeitsgehalt des Breis ca. 75 %) beaufschlagt, den die Walze beim Drehen als dünnen Film auf der Walzenoberfläche mitnimmt. Während der Drehbewegung verdampft das Wasser, was eine hohe Energiezufuhr zur Vorraussetzung hat. Das getrocknete Produkt wird mit einem Feuchtigkeitsgehalt von ca. 2 - 5 % durch Messer als Flockenbahn von der Walzenoberfläche gelöst. Die Endfeuchte, die für die mechanischen Eigenschaften, insbesondere die Brüchigkeit der Futterflocken, sowie für die Akzeptanz eine wesentliche Rolle spielt, läßt sich bei diesem Verfahren nur in engen Grenzen einstellen. Die Dicke der Flockenbahn, hergestellt nach o.g. Verfahren, beträgt in Abhängigkeit von den verwendeten Rohstoffen ca. 0,15 mm und ist nur wenig variierbar. Die Dampftemperatur zum Beheizen der Walze liegt bei 120 - 165°C. Hitzelabile Rohstoffe, z.B. Enzyme und Probiotika sind daher nicht einsetzbar. Nach dem Produktionsprozeß erfolgt die Zerkleinerung der zusammenhängenden Flockenbahn zu verkaufsfähigem Flockenfutter, das aus Einzelflocken unterschiedlicher Größen besteht, die durch eine ungleichmäßige Form charakterisiert sind und für die Ernährung von Wassertieren, inbesondere von Zierfischen, Verwendung finden.

Aufgabe der vorliegenden Erfindung ist die Entwicklung neuartiger Flockenfutter insbesondere für Wassertiere, wie Fische, Shrimps und Invertebraten, einsetzbar in Süßund Seewasser, speziell für Warm- und Kaltwasser-Zierfische im Aquarium und Gartenteich, die sich für den Anwender nachvollziehbar hinsichtlich Dicke, Brüchigkeit, Konsistenz und/oder äußerer Form bzw. durch den Einsatz bisher nicht verwendbarer hitzelabiler Rohstoffe von den bisher am Markt befindlichen unterscheiden.

Überraschenderweise wurde nun gefunden, daß durch ein spezielles Produktionsverfahren, dem Auswalzen von einzelnen Formkörpern, produziert vorzugsweise mit einem Extruder, z. B. einem Doppelschneckenextruder oder einem Expander derartige Futterflocken hergestellt werden können. Dieser Prozeß liefert ohne zusätzliche Bearbeitungsschritte gleichmäßig geformte Flocken mit variabler Dicke zwischen 80 bis 140 µm. Durch die Möglichkeit einer Variation der Flockenform, der Flockendicke und der Flockenfeuchte sowie durch die Einsatzmöglichkeit hitzelabiler Rohstoffe besitzen die so produzierten Flocken wesentlich bessere Eigenschaften als die gegenwärtigen Flockenfutter.

Gegenstand der Erfindung sind daher neuartige Flockenfutter für Wassertiere wie Fische, Shrimps und Invertebraten im Süß- und Seewasser gemäß Patentansprüch 1 bei dem die Flocken eine gleichmäßige Form, eine Dicke von 80 bis 140 µm und einen Wassergehalt von 1 - 30 %, bevorzugt 4 - 25 % aufweisen.

Gegenstand der Erfindung ist ferner ein Verfahren zur Herstellung eines Flockenfutters aus geeigneten Futterbestandteilen gemäß Patentansprüch 8, das u.a. folgende Stufen umfaßt:
a) Herstellen von Formkörpern geeigneter Abmessungen; und
b) Auswalzen der Formkörper zu Einzelflocken.

Der spezielle Herstellungsprozeß umfaßt die folgenden Prozeßschritte. Vorzugsweise mittels eines Extruders, z.B. eines Doppelschneckenextruders, werden Formkörper (Wassergehalt ca. 40 % oder weniger) solcher Abmessungen produziert, daß bei deren anschließendem Auswalzen in einem geeigneten Walzenstuhl Einzelflocken mit einer variablen Dicke zwischen 10 µm und 5 mm und einem Durchmesser von 1 - 100 mm produziert werden. Der Abstand zwischen den Walzen einer Flockiereinrichtung aus zwei sich drehenden Walzen bestimmt die Flockendicke. Bei der Herstellung der Formkörper ist die Temperatur auf < 70°C reduzierbar. Diese Flocken können dann einer Trocknung und/oder Kühlung bis zur gewünschten Endwassergehalt unterzogen werden.

Das erfindungsgemäße Herstellverfahren erlaubt die industrielle Produktion von Futterflocken mit verbesserten funktionellen und physikalischen Eigenschaften, die mit dem bisherigen Verfahren zur Herstellung von Flockenfutter durch Trocknung eines Rohstoffbreis auf Walzentrocknern nicht erzielbar sind:
- Gleichmäßige Flockenform: Es sind gleichmäßig geformte, z.B. runde, ovale, gewellte, herz- oder fischförmige oder anders gleichmäßig geometrisch geformte Flocken herstellbar.
- Gleichmäßige Flockengröße: Durch die gezielte Herstellung von Formkörpern definierter Größe mit anschließendem Auswalzen sind Flocken in gleichmäßiger Größe zwischen 1 und 100 mm produzierbar.
- Verbesserte mechanische Eigenschaften: Durch gezielte Einstellung des Wassergehaltes erhöht sich die Flockenstabilität. Dadurch vermindert sich der Anteil an Kleinflocken (Bruch), z.B. bei der Herstellung von Flockenmischungen, was zu einer Reduzierung des Schüttgewichts bzw. der Dosenfüllgewichte führt. Zusätzliche Arbeitsschritte, wie Absiebung des Bruchs, entfallen.
- Verbesserte Flockenkonsistenz, Herstellung von Softflocken: Durch Einstellung eines Wassergehaltes von 8 - 25 % ist es möglich, extrem weiche und elastische Flocken zu fertigen, die von den Fischen noch besser aufgenommen werden.
- Gezielte Einstellung des Schwimm- und Sinkverhaltens: Die Einstellung des Walzenabstands beim Auswalzvorgang bestimmt die Flockendicke. Dünnere Flocken als die gegenwärtigen zeigen ein verbessertes Schwimm- und Sinkverhalten. Dickere Flocken besitzen eine höhere Sinkgeschwindigkeit. Eine Mischung von Flocken unterschiedlicher Dicke führt somit zu einem Produkt, das für alle Fische gleichermaßen optimal ist, ganz gleich, ob sie nun bevorzugt von der Oberfläche, aus dem Mittelwasser oder vom Boden fressen.
- Herstellbarkeit mehrfarbiger Einzelflocken: Durch das Flockieren von mehrfarbigen Formkörpern sind Flocken produzierbar, die zwei oder mehr Farben aufweisen.
- Einbringung bzw. Schonung temperaturempfindlicher Substanzen: Die geringen Prozeßtemperaturen des neuartigen Verfahrens (< 70°C) ermöglichen die Verwendung von Rohstoffen, die aufgrund ihrer Temperaturlabilität bisher nicht einsetzbar waren:
   * Natürliche Geruchs- und Geschmacksstoffe sowie natürliche Farbstoffe: verbessern die Attraktivität und Akzeptanz der Flocken.
   * Aktive Enzyme: erhöhen die Bioverfügbarkeit der Nährstoffe. Ein solches Futter vermindert die fütterungsbedingte Wasserbelastung und trägt zu einer ökologischen Optimierung der Wasserqualität bei.
   * Lebende Bakterien und Hefen: sind als Verdauungsregulatoren (Probiotika) zusetzbar. Damit ist eine verbesserte Gewichtsentwicklung bei gleichem Futterkonsum erreichbar.
   * Zugabe von Promotoren, z.B. Wachstums-, Laichförderer zur Verbesserung des Wachstums und zur Erhöhung der Laichbereitschaft.
   * Die Abbauraten wertbestimmender Rohstoffkomponenten (Vitamine, Farbverstärker) reduzieren sich durch die niedrigen Prozeßtemperaturen. Die diesbezüglichen Sicherheitszuschläge können verringert werden, was zu Kosteneinsparungen führt.

Darüber hinaus sind die Energiekosten für die Trocknung des Flockenfutters zur gewünschten Endfeuchte erheblich niedriger als bei den dem bisherigen Stand der Technik entsprechenden Produktionsverfahren, die auf der Walzentrocknung eines Rohstoffbreis beruhen, der einen Anfangswassergehalt von überlicherweise > 60 % aufweist, da die Ausgangfeuchte der Formkörper bei dem erfindungsgemäßen Verfahren bei < 40 % Wasser liegt. Das neuartige Herstellverfahren bietet also sowohl bezüglich der Eigenschaften des damit herzustellenden Flockenfutters als auch im Hinblick auf die für die Herstellung erfoderlichen Energiekosten gegenüber dem bisherigen Stand der Technik erhebliche Vorteile.

## Patentansprüche

1. Wassertier-Flockenfutter mit Flocken einer gleichmäßigen Form, hergestellt durch die Schritte
a) Herstellen von Formkörpern definierter Größe aus geeigneten Futterbestandteilen; und
b) Auswalzen der so hergestellten Formkörper definierter Größe zu Einzelflocken gleichmäßiger Form mit einer Dicke zwischen 80 und 140µm und einem Wassergehalt von 1 - 30%, vorzugsweise von 4 - 25%.

2. Wassertier-Flockenfutter nach Anspruch 1, wobei die Einzelflocken einen Durchmesser zwischen 1 und 100mm haben.

3. Wassertier-Flockenfutter nach Anspruch 1 oder 2, wobei die Flocken temperaturempfindliche Substanzen enthalten.

4. Wassertier-Flockenfutter nach Anspruch 3, wobei die temperaturempfindlichen Substanzen aus Geruchs- und Geschmacksstoffen, Farbstoffen, Enzymen, Promotoren, Probiotika, Vitaminen und Farbverstärkern augewählt sind.

5. Wassertier-Flockenfutter nach Anspruch 4, wobei die Probiotika lebende Bakterien oder Hefen sind.

6. Wassertier-Flockenfutter nach Anspruch 4 oder 5, wobei die Promotoren Wachstumsförderer oder Fruchtbarkeitsförderer sind.

7. Wassertier-Flockenfutter nach einem der Ansprüche 1 bis 6, wobei die Einzelflocken eine runde, ovale, gewellte, herzoder fischförmige oder eine andere gleichmäßige geometrische Form besitzen.

8. Verfahren zur Herstellung eines Wassertier-Flockenfutters, mit folgenden Schritten:
a) Herstellen von Formkörpern definierter Größe aus geeigneten Futterbestandteilen;
b) Auswalzen der so hergestellten Formkörper definierter Größe zu Einzelflocken gleichmäßiger Form und einer Dicke zwischen 80 und 140µm und
c) Einstellen eines Wassergehalts im Verfahren, so dass die fertigen Flocken einen Wassergehalt von 1 - 30%, vorzugsweise von 4 - 25% besitzen.

9. Verfahren nach Anspruch 8, wobei die im Schritt a) erhaltenen Formkörper einen Wassergehalt von 40 % oder weniger aufweisen.

10. Verfahren nach Anspruch 8 oder 9, wobei die Herstellung der Formkörper im Schritt a) mit Hilfe eines Extruders oder Expanders erfolgt.

11. Verfahren nach einem der Ansprüche 8 bis 10, wobei die Herstellung im Schritt a) bei Temperaturen von 60°C bis 150°C durchgeführt wird.

12. Verfahren nach einem der Ansprüche 8 bis 10, wobei die Herstellung im Schritt a) bei Temperaturen von 70°C oder darunter durchgeführt wird.

13. Verfahren nach einem der Ansprüche 8 bis 12, wobei die Herstellung im Schritt b) mit Hilfe eines Walzenstuhls erfolgt, der zwei rotierende Walzen besitzt, die zwischen sich einen Abstand haben, der die Dicke der ausgerollten Flocken bestimmt.

14. Verfahren nach einem der Ansprüche 8 bis 13, wobei die Einzelflocken nach dem Schritt b) einer Trocknung und/oder Kühlung bis zum gewünschten Endwassergehalt unterzogen werden.

## Claims

1. Flake feed for aquatic animals with flakes of a uniform form made by the steps of:
a.) producing formed bodies of definite size from appropriate constituents of feeding material; and
b.) rooling out of the so formed bodies of definite size to give, individual flakes of a uniform form and a thickness of between 80 and 140 µm and a water content of from 1 to 30%, preferably 4 to 25%.

2. Flake feed for aquatic animals according to claim 1, wherein the individual flakes have a diameter of between 1 and 100 mm.

3. Flake feed for aquatic animals according to claim 1 or 2, wherein the flakes contain substances sensitive to higher temperature.

4. Flake feed for aquatic animals according to claim 3, wherein the substances sensitive to higher temperature are selected from olfactory or taste forming substances, colors, enzymes, promoting substances, probiotic substances, vitamines and color increasing substances.

5. Flake feed for aquatic animals according to claim 4, wherein the probiotic substances are living bacteria or yeasts.

6. Flake feed for aquatic animals according to claim 4 or 5, wherein the promoting substances are substances promoting growth or fertility.

7. Flake feed for aquatic animals according to anyone of claims 1 to 6, wherein the individual flake has a round, oval, undulated, heart- or fish-like, or any other regular geometric form.

8. A process for manufacturing flake feed for aquatic animals comprising the following steps:
a.) producing formed bodies of definite size from constituents of appropriate feeding material
b.) rooling out of the so formed bodies of definite size to give individual flakes of a uniform form and a thickness of between 80 and 140 µm,
c.) setting the water content in the process to obtain finished flakes of a water content of 1 to 30 %, preferably 4 to 25%.

9. A process according to claim 8, wherein the formed bodies obtained in step a) have a water content of 40 % or less.

10. A process according to claims 8 or 9, wherein the formed bodies made in step a) are manufactured with an extruder or expander.

11. A process according to claims 8 to 10, wherein the process of step a) is carried out at a temperature of 60 to 150 ° C.

12. A process according to claims 8 to 10, wherein the process of step a) is carried out at a temperature of 70 °C or lower.

13. A process according to anyone of claims 8 to 12, wherein the process of step b) is carried out with a calander equipped with two rotating rollers having a distance from each other which is determining the thickness of the flakes rolled out.

14. A process according to anyone of claims 8 to 13, wherein the individual flakes after step b) are dried and/or cooled until the desired final water content is reached.

## Revendications

1. Nourriture en flocons pour animaux aquatiques avec des flocons ayant une forme semblable, fabriqués par les étapes suivantes:
a) fabrication, à partir de constituants nutritionnels appropriés, de corps façonnés présentant une dimension définie, et
b) laminage des corps façonnés ainsi fabriqués, présentant une dimension définie, pour former des flocons unitaires de forme dimensionnelle semblable présentant une épaisseur comprise entre 80 et 140µm et une teneur en eau comprise entre 1 et 30%, de préférence comprise entre 4 et 25%.

2. Nourriture en flocons pour animaux aquatiques selon la revendication 1, dont lesdits flocons présentent un diamètre de 1 à 100mm.

3. Nourriture en flocons pour animaux aquatiques selon la revendication 1 ou 2, dont lesdits flocons contiennent des substances sensibles à la température.

4. Nourriture en flocons pour animaux aquatiques selon la revendication 3, dans laquelle les substances sensibles à la température sont choisis dans le groupe comprenant matières conférant sapidité et parfum, matières colorantes, enzymes, promoteurs, probiotiques, vitamines et renforceurs de coloration.

5. Nourriture en flocons pour animaux aquatiques selon la revendication 4, dans laquelle les probiotiques sont des bactéries vivantes ou des levures.

6. Nourriture en flocons pour animaux aquatiques selon la revendication 4 ou 5, dans laquelle les promoteurs sont des activateurs de croissance ou des activateurs de fertilité.

7. Nourriture en flocons pour animaux aquatiques selon une quelconque des revendications 1 à 6, dans laquelle les flocons unitaire ont une forme ronde, une forme ovale, une forme ondulée, une forme de coeur ou une forme de poisson ou toute autre forme géométrique similaire.

8. Procédé de préparation de nourriture en flocons pour animaux aquatiques, comprenant les étapes suivantes :
a) fabrication, à partir de constituants nutritionnels, de corps façonnés présentant une dimension définie,
b) laminage des corps façonnés ainsi fabriqués, présentant une dimension définie, pour former des flocons unitaires de forme dimensionnelle semblable présentant une épaisseur comprise entre 80 et 140µm
c) régler la teneur en eau du procédé de façon que les flocons finaux obtenus présentent d'une teneur en eau comprise entre 1 et 30%, de préférence comprise entre 4 et 25%.

9. Procédé selon la revendication 8, dans lequel les corps façonnés obtenus dans l'étape (a) présentent une teneur en eau égale ou inférieure à 40%.

10. Procédé selon la revendication 8 ou 9, dans lequel la fabrication des corps façonnés obtenus dans l'étape a) est réalisée à l'aide d'un appareil d'extrusion ou d'un appareil d'expansion.

11. Procédé selon une quelconque des revendications 8 à 10, dans lequel la fabrication de l'étape a) est réalisée à une température comprise entre 60°C et 150°C.

12. Procédé selon une des revendications 8 à 10, dans lequel la fabrication de l'étape a) est réalisée à une température égale ou inférieure 70°C.

13. Procédé selon une quelconque des revendications 8 à 12, dans lequel la fabrication de l'étape b) est réalisée à l'aide d'une machine de laminage qui comporte deux rouleaux rotatifs lesquels présentent entre eux un intervalle correspondant à celui de l'épaisseur recherchée pour les flocons.

14. Procédé selon une quelconque des revendications 8 à 13, dans lequel les flocons unitaires sont soumis après l'étape b) à un séchage et/ou à un refroidissement jusqu'à ce que la teneur finale requise en eau soit atteinte.
